# EUROPÄISCHE PATENTSCHRIFT

(11) **EP 2 504 144 B1**
(45) Veröffentlichungstag und Bekanntmachung des Hinweises auf die Patenterteilung: **25.09.2013**
(21) Anmeldenummer: 10779825.8
(22) Anmeldetag: 23.11.2010
(51) Int. Cl.: B29C 45/04, B29C 45/14, B29C 45/16

(54) **VERFAHREN UND VORRICHTUNG ZUM HERSTELLEN VON FORMZIERTEILEN**
METHOD AND APPARATUS FOR MANUFACTURING MOLDED DECORATIVE PARTS
PROCÉDÉ ET DISPOSOTIFE POUR LA FABRICTAION DE PIECES DÉCORATIVES MOULÉES

(30) Priorität: 23.11.2009 DE 102009055983
(43) Veröffentlichungstag der Anmeldung: 03.10.2012
(73) Patentinhaber: Horeth Kunststoffverarbeitung GmbH, 73240 Wendlingen (DE)
(72) Erfinder: HORETH, Dieter, 73240 Wendlingen (DE); HORETH, Wolfgang, 73257 Köngen (DE)
(74) Vertreter: Dreiss
(86) Internationale Anmeldenummer: PCT/EP2010/068029
(87) Internationale Veröffentlichungsnummer: WO 2011/061346

(56) Entgegenhaltungen:
- EP-A1- 1 612 024
- EP-A1- 1 886 787
- EP-A2- 1 219 401
- WO-A1-2008/046180
- DE-A1- 10 139 839
- DE-A1- 19 949 263
- DE-A1-102006 026 063
- DE-A1-102007 036 660
- DE-C1- 10 034 518
- JP-A- 9 239 775
- JP-A- 2002 337 183
- JP-A- 2006 027 138
- US-A1- 2007 172 664
- BURKLE E ET AL: "VERBUNDBAUTEILE MIT MEHRPROZESSANLAGEN WIRTSCHAFTLICH HERSTELLEN", KUNSTSTOFFE, CARL HANSER VERLAG, MUNCHEN, DE, Bd. 81, Nr. 3, 1. März 1991 (1991-03-01), Seiten 192-198, XP000287480, ISSN: 0023-5563

## Beschreibung

Die Erfindung betrifft ein Verfahren und eine Vorrichtung zum Herstellen von Formzierteilen. Solche Formzierteile können beispielsweise bei der Innenverkleidung von Kraftfahrzeuginnenräumen oder zur optischen Gestaltung von Haushaltsgeräten Verwendung finden. Ein derartiges Formzierteil enthält eine Lage eines Dekorwerkstoffes (zum Beispiel Holzfurnier, Textil, Leder), welcher das optische Erscheinungsbild des Zierteils aufwertet. Der Dekorwerkstoff ist meist flexibel und/oder empfindlich gegen mechanische Beschädigung. Zur Herstellung eines Formzierteils wird daher der Dekorwerkstoff üblicherweise einerseits mit einem Trägermaterial (zum Beispiel Kunstharz) hinterspritzt, welches die erforderliche mechanische Stabilität aufweist. Auf der dem derart angeformten Trägermaterial abgewandten Seite wird der Dekorwerkstoff meist mit einem Schutzmaterial überzogen bzw. überspritzt. Das Schutzmaterial ist dabei meist transparent und bildet Oberflächen mit guter optischer Qualität (zum Beispiel Kunststoffe aus der Gruppe der Polyurethane (PUR) oder Polymethylmethacrylat (PMMA)). Die vorliegend behandelten Formzierteile sind demnach Verbundwerkstoffe, welche üblicherweise drei Lagen aufweisen (Trägerstoff, Dekorwerkstoff, Schutzstoff).

Zur Herstellung von Formzierteilen wird üblicherweise zunächst ein Rohling aus einem Dekorwerkstoff in einer Pressform vorgeformt. Der Vorformling wird daraufhin in eine Spritzgießeinrichtung überführt und dort mit einem Trägerstoff hinterspritzt. In einem nächsten Schritt wird das Werkstück in eine zweite Spritzgießvorrichtung transferiert und dort mit einem Schutzstoff überspritzt. Schließlich folgt im Anschluss daran ein Beschneidungsvorgang, um das Formzierteil auf ein Endmaß zu schneiden. Insbesondere muss dabei der bei den Hinter- und Überspritzvorgängen gehaltene Rand des Werkstücks nachbearbeitet werden. Ein solches Verfahren kann in einer Produktionsstraße im kontinuierlichen Betrieb durchgeführt werden und ist daher tauglich zur Massenproduktion von Formzierteilen. Allerdings erfolgt zwischen den Arbeitsschritten ein Wechsel des jeweiligen Zwischenproduktes in ein nächstes Werkzeug. Dies hat den Nachteil, dass empfindliche Oberflächen beschädigt werden oder sich die vorgeformten Teile verziehen können; letzteres insbesondere, wenn verschiedene Verfahrenschritte bei stark variierenden Temperaturen durchgeführt werden. Dies kann zu Qualitätseinbußen und Maßungenauigkeiten führen.

Aus der JP 2002 337183 A ist ein Verfahren bekannt, bei dem ein Body F mittels zweier Formpaarhälften überspritzt und hinterspritzt wird. Ferner ist es aus der EP 1 219 401 A2 bekannt, eine preform zu über- und hinterspritzen. In der EP 1 612 024 A1 ist beschrieben, dass eine Armierungskomponente aus Metall, welche in einem Vorbereitungsschritt durch Tiefziehen hergestellt wird, über- und hinterspritzt wird. Weiterhin offenbart die JP 9 239775 A das Über- und Hinterspritzen einer Transferfolie. Ein ähnliches Verfahren ist aus der EP 1 886 787 A1 bekannt. Aus der JP 2006 027138 A ist darüber hinaus eine Vorrichtung bekannt, mit der ein eingesetztes Material zunächst formgepresst und anschließend überspritzt wird. Die US 2007/0172664 A1 zeigt ein Verfahren zum Über- und Hinterspritzen einer Dekorschicht, welche in einem ersten Prozessschritt verformt wurde. Ferner beschreibt Bürkle in Kunststoffe (Carl HanserVerlag, München 1991, Bd. 81, Nr. 3, Seiten 192-198) ein Verfahren zum Formpressen von Thermoplasten und dem anschließenden Anspritzen von Funktionselementen. Die EP 1 629 956 A1 beschreibt ein Verfahren und eine Vorrichtung zur Herstellung von Zierteilen, wobei alle Verfahrensschritte (Formen, Überspritzen, Hinterspritzen, Zuschneiden) in einer Bearbeitungsvorrichtung erfolgen. Dadurch werden zwar Qualitätseinbußen durch einen Wechsel von Zwischenprodukten in verschiedene Vorrichtungen vermieden. Allerdings ist das Verfahren ausschließlich sequentiell, das heißt für nur jeweils ein Werkstück durchführbar. Die Bearbeitungsvorrichtung ist so lange blockiert, bis ein Zierteil komplett fertig gestellt ist. Dies führt zu ungenutzten Wartezeiten während der jeweiligen Verfahrensschritte, was sich negativ auf die Wirtschaftlichkeit des Verfahrens auswirkt.

Der vorliegenden Erfindung liegt im Hinblick darauf die Aufgabe zu Grunde, die Herstellung von qualitativ hochwertigen und maßgenauen Formzierteilen mit hoher Wirtschaftlichkeit zu ermöglichen.

Diese Aufgabe wird durch ein Verfahren nach Anspruch 1, sowie durch eine Vorrichtung mit den Merkmalen des Anspruchs 10 gelöst.

Beim erfindungsgemäßen Verfahren werden demnach drei Schritte wiederholt durchlaufen. Erstens erfolgt ein Formpressen eines eine Sichtseite und einer Trägerseite aufweisenden Dekorrohlings als erstes Werkstück in einer Pressform, welche einen Press-Stempel und eine erste Matrize umfasst, derart, dass das erste Werkstück nach dem Formpressen in der ersten Matrize formgebunden ist. Im folgenden Verfahrenschritt erfolgt der Transfer der ersten Matrize zu einem Spritz-Stempel und ein Hinterspritzen des ersten Werkstücks auf der Trägerseite mit einem Trägerstoff in einer Hinterspritzform, welche die erste Matrize und den Spritz-Stempel umfasst, wobei nach dem Hinterspritzen das erste Werkstück an dem Spritz-Stempel formgebunden verbleibt. Schließlich erfolgt der Transfer des Spritz-Stempels zu einer zweiten Matrize und ein Überspritzen des ersten Werkstückes auf der Sichtseite mit einem Schutzstoff in einer Überspritzform, welcher den Spritz-Stempel und die zweite Matrize umfasst.

Erfindungsgemäß ist dabei weiterhin vorgesehen, dass im selben Verfahrensschritt mit dem Überspritzen ein weiterer Dekorrohling als zweites Werkstück in der ersten Matrize in einer dem ersten Verfahrensschritt entsprechenden Weise formgepresst und formgebunden wird und danach das Verfahren für das zweite Werkstück weiter wie für das erste Werkstück durchgeführt wird.

In diesem Zusammenhang wird unter einer Matrize diejenige Hälfte eines formgebenden oder formbearbeitenden Werkzeuges aus zwei Hälften verstanden, an welche das Dekorwerkstück zur Formgebung angepresst oder in welcher das Dekorwerkstück eingebettet wird. Üblicherweise stellt eine Matrize einen Formholraum oder eine formgebende Vertiefung bereit. Als Stempel wird diejenige Hälfte eines formgebenden oder formbearbeitenden Werkzeuges bezeichnet, mittels welcher das Anpressen beziehungsweise Einbetten des Dekorwerkstücks in die Matrize erfolgt oder mittels welcher die Matrize zu einem formgebenden bzw. formbearbeitenden Werkzeug vervollständigt wird.

Ausgangsmaterial des Verfahrens kann eine ungeformte und nicht zugeschnittene Lage eines Dekormaterials sein. Andererseits ist auch denkbar, bereits vorgeformte und/oder konturgeschnittene Dekorrohlinge zu verwenden.

Da der Dekorrohling nach dem Formpressen in der ersten Matrize formgebunden ist, wird verhindert, dass sich der vorgeformte Dekorrohling vor dem Hinterspritzen mit dem stabilisierendem Trägermaterial verzieht. Insbesondere können die Verfahrensbedingungen beim Formpressen oder Hinterspritzen daher auf eine optimale Umformung abgestimmt werden - beispielsweise mit Temperaturübergängen oder erhöhter Temperatur während des Formpressens, ohne dass auf die Gefahr des Verziehens der Form (zum Beispiel beim Abkühlen) Rücksicht genommen werden muss.

In entsprechender Weise wird eine Formveränderung bei oder nach dem Verfahrensschritt zum Hinterspritzen vermieden, da das Werkstück am Spritz-Stempel formgebunden verbleibt. Diese Formbindung ist insbesondere vorteilhaft, da bei dem Trägerstoff beim Aushärten beziehungsweise Erkalten Volumensänderungen auftreten oder sich innere Spannungen des Materials aufbauen können.

Das Werkstück bleibt beim erfindungsgemäßen Verfahren somit über die gesamte Bearbeitungszeit formgebunden - zunächst in der ersten Matrize, dann am Spritz-Stempel. Dadurch wird eine hohe Maßgenauigkeit und Verarbeitungsqualität erreicht.

Da im selben Verfahrenschritt, in dem das erste Werkstück überspritzt wird, ein weiterer Dekorrohling wieder in der ersten Matrize formgepresst wird, kann ein kontinuierlicher Ablauf des Verfahrens erreicht werden. Dabei wird abwechselnd jeweils ein Dekorrohling überspritzt und ein weiterer gleichzeitig formgepresst, und danach der formgepresste Dekorrohling hinterspritzt. Die erste Matrize ist dabei nach dem Verfahrensschritt zum Hinterspritzen des ersten Werkstückes frei geworden, in dem dieses am Spritz-Stempel formgebunden wurde. Die Wartezeit während des Überspritzens wird folglich zum Formpressen eines weiteren Dekorrohlings genutzt. Der Verfahrensschritt zum Hinterspritzen kann beispielsweise zum Auswerfen eines fertigen Zierteils und/oder zum Zuführen eines weiteren Dekorrohlings zur Vorrichtung genutzt werden. Dadurch kann die Wirtschaftlichkeit des Verfahrens erhöht werden. Insbesondere ist eine Vollautomatisierung des kontinuierlichen Betriebs zur Massenproduktion möglich.

Das erfindungsgemäße Verfahren hat weiterhin den Vorteil, dass es in einer einzigen Vorrichtung ausgeführt werden kann, welche insbesondere die erste Matrize und den Spritz-Stempel umfasst. Damit ist ein Wechsel zwischen verschiedenen Bearbeitungsvorrichtungen nicht erforderlich, wodurch insbesondere Beschädigungen der empfindlichen Oberflächen des Dekorrohlings vor der Fertigstellung vermieden werden können. Insofern kann mit dem erfindungsgemäßen Verfahren die optische Qualität der Produkte verbessert werden.

Das vorstehend beschriebene Verfahren wird vorteilhafterweise als Arbeitsverfahren in einer Vorrichtung ausgeführt, welche einen Press-Stempel und eine erste Matrize zur Vorgabe einer Pressform sowie einen Spritz-Stempel und eine zweite Matrize aufweist. Dabei sind die Matrizen relativ zu den Stempeln derart bewegbar, dass die Vorrichtung in eine Offenstellung und eine Schließstellung bewegbar ist. Außerdem sind die Matrizen derart relativ zu dem Stempel bewegbar, dass die Vorrichtung bewegbar ist in eine Press-Lage, bei der die erste Matrize dem Press-Stempel und die zweite Matrize dem Spitz-Stempel zugeordnet ist, und in eine Gieß-Lage, bei der die erste Matrize dem Spritz-Stempel zugeordnet ist.

Dabei ist die Offenstellung der Vorrichtung dadurch ausgezeichnet, dass die Matrizen von den Stempeln derart beabstandet sind, dass ein Zwischenraum bereit gestellt wird, in den ein zu verarbeitender Dekorrohling eingebracht werden kann. In der Schließstellung hingegen liegt der Press- beziehungsweise Spritz-Stempel an der jeweiligen zugeordneten Matrize an oder greift in diese ein.

Die Arbeitsschritte des Arbeitsverfahrens werden dabei wie in Anspruch 2 beschrieben durchlaufen und dadurch die Verfahrensschritte des erfindungsgemäßen Verfahrens nach Anspruch 1 ausgeführt. Dabei wird zu einer kontinuierlichen Durchführung des Verfahrens die Vorrichtung im Wesentlichen abwechselnd in Offen- beziehungsweise Schließstellung und parallel dazu abwechselnd in Press- und Gieß-Lage bewegt.

Hierbei sind die beiden Stempel und die Matrizen derart angeordnet, dass nacheinander - jeweils in Schließ-Stellung - einerseits gleichzeitig die Pressform für ein Werkstück und die Überspritzform für ein anderes Werkstück bereit gestellt wird (Press-Lage), andererseits die Hinterspritzform für ein bereits formgepresstes Werkstück bereit gestellt wird (Gieß-Lage). Nach dem Hinterspritzen wird die erste Matrize wieder frei zur Aufnahme eines weiteren Dekorrohlings, da das Werkstück am Spritz-Stempel formgebunden verbleibt. Auf diese Weise wird, wie bereits oben erläutert, ein kontinuierlicher Betrieb ermöglicht.

Eine besonders bevorzugte Ausgestaltung des Verfahrens ergibt sich daraus, dass beim Verfahrensschritt zum Formpressen solche Abschnitte des ersten Werkstückes abgequetscht werden, welche die Pressform überragen. Eine Nachbearbeitung der Konturen des Formzierteils auf ein Endmaß ist daher nicht mehr erforderlich. Insbesondere entsteht beim erfindungsgemäßen Verfahren kein Rand, an dem das Werkstück während des Hinterspritzens und/oder Überspritzens gehalten wird, und welcher nachbearbeitet werden muss. Alternativ ist auch denkbar, dass die überragenden Abschnitte abgeschnitten werden

Das Abquetschen ist hierbei von einem Abschneiden der überragenden Abschnitte zu unterscheiden. Insbesondere dringt beim Abquetschen im Gegensatz zum Abschneiden keine Tauchkante zur Trennung der Abschnitte in das Material ein. Durch das Abquetschen kann einerseits erreicht werden, dass das Dekormaterial am Konturrand komprimiert wird und bei dem fertigen Formzierteil saubere und hochwertige Übergänge zwischen Dekorwerkstoff und Trägerstoff beziehungsweise Schutzstoff entstehen. Andererseits unterstützt das Abquetschen entlang der Kontur die Formbindung des Werkstücks in der ersten Matrize.

Zur weiteren Ausgestaltung wird vor dem Hinterspritzen auf die Trägerseite und/oder vor dem Überspritzen auf die Sichtseite eine Verbundschicht aus einem verbindenden Material oder ein Verbundstoff, insbesondere Klebstoff oder reaktiver Schmelzklebstoff aufgebracht. Dadurch kann eine stoffschlüssige Verbindung des Dekorwerkstoffes mit dem Trägerstoff und/oder mit dem Schutzstoff erreicht werden. Dies erlaubt die Herstellung von Formzierteilen ausgehend von Dekorwerkstoffen, welche keine oder nur unvollständige Verbindungen mit Kunststoffen eingehen. Selbstverständlich können der Trägerstoff und/oder der Schutzstoff aber auch ohne derartige Zwischenschichten auf das Dekormaterial aufgebracht werden. Dies wird durch das erfindungsgemäße Verfahren insbesondere dadurch unterstützt, dass für die Spritzvorgänge optimale Temperaturbedingungen gewählt werden können, ohne dass die Gefahr des Verziehens des Werkstücks besteht, da dieses während des gesamten Verfahrens formgebunden ist.

Vorteilhafterweise ist bei dem Verfahrensschritt zum Formpressen eine erhöhte Temperatur gegenüber dem Verfahrenschritt zum Hinterspritzen und/oder zum Überspritzen vorgesehen. Insbesondere ist vorgesehen, dass der Verfahrenschritt zum Formpressen bei einer Temperatur zwischen 120°C und 140°C erfolgt, der Verfahrenschritt zum Hinterspritzen und/oder zum Überspritzen bei einer Temperatur zwischen 80°C und 100°C erfolgt. Durch die erhöhte Temperatur beim Formpressen kann eine dauerhafte und maßgenaue Formgebung erreicht werden. Insbesondere können die beim Verformen des Dekorrohlings auftretenden inneren Spannungen reduziert werden. Demgegenüber können die Temperaturen beim Verfahrenschritt zum Hinterspritzen und/oder zum Überspritzen derart gewählt werden, dass eine optimale Verbindung zwischen Dekorwerkstoff und Trägerstoff beziehungsweise Schutzstoff erreicht wird. Die erhöhte Temperatur kann dabei während des gesamten Verfahrenschritts zum Formpressen vorliegen, oder sprunghaft in der Art eines Temperaturpulses variiert werden. Auf Grund der permanenten Formbindung des Werkstücks beim erfindungsgemäßen Verfahren besteht die Gefahr des Verziehens des Werkstücks selbst bei abrupten Temperaturänderungen nicht.

Vorteilhafterweise ist vorgesehen, dass nach oder während des Verfahrensschritts zum Formpressen eine Impulskühlung der ersten Matrize und/oder des Press-Stempels erfolgt. Außerdem ist denkbar, dass vor oder während des Verfahrensschritts zum Formpressen die erste Matrize und/oder der Press-Stempel erwärmt wird.

Eine besonders bevorzugte Ausgestaltung des Verfahrens ergibt sich daraus, dass die Verfahrenschritte zum Formpressen und zum Überspritzen über eine Zeitspanne T1 erfolgen und der Verfahrenschritt zum Hinterspritzen über eine Zeitspanne T2 erfolgt, wobei die Zeitspanne T1 länger ist als die Zeitspanne T2. Die verlängerte Zeitspanne T1 erlaubt es, die Verfahrenschritte zum Formpressen und zum Überspritzen in einer langsamen Art und Weise durchzuführen. Da der Verfahrenschritt zum Formpressen über eine verlängerte Zeitspanne T1 abläuft, kann eine maßgenaue und dauerhafte Formgebung erreicht werden. Außerdem kann durch einen langsamen Formprozess die Materialbeanspruchung gegenüber einem schnellen Prozess verringert werden. In ähnlicher Weise begünstigt eine langsame Durchführung des Überspritzprozesses die Ausbildung einer Schutzstoffschicht mit hoher Oberflächenqualität. Damit trägt eine verlängerte Zeitspanne T1 einerseits zu einer erhöhten Maßgenauigkeit und Beständigkeit der Formzierteile, andererseits zu einer erhöhten optischen Qualität, insbesondere auf der Sichtseite des Formzierteils, bei. Erfindungsgemäß laufen dabei die langsamen Verfahrenschritte parallel ab. Zwischen je zwei langsamen Verfahrenschritten findet über die verhältnismäßig kurze Zeitspanne T2 der Verfahrenschritt zum Hinterspritzen eines formgepressten Werkstückes statt. Dies trägt zur Effizientsteigerung des Verfahrens bei.

Zur weiteren Ausgestaltung ist vorgesehen, dass während des Verfahrenschrittes zum Formpressen das Werkstück getrocknet wird. Dies ist insbesondere dann vorteilhaft, wenn zur Erhöhung der Verformbarkeit oder zur Verbesserung der Verformqualität der Dekorrohling beispielsweise mit Wasser oder einem Lösungsmittel angefeuchtet wurde.

Außerdem ist vorteilhaft, wenn vor dem Verfahrenschritt zum Formpressen das Werkstück gefärbt, gebleicht oder zum Lichtschutz behandelt wird. Derartige Verarbeitungsprozesse sind bei der Fertigung von Formzierteilen in der Regel notwendig oder vorteilhaft.

Die eingangs gestellte Aufgabe wird auch durch die Vorrichtung des Anspruchs 10 gelöst, welche einen Press-Stempel und eine erste Matrize, sowie einen Spritz-Stempel und eine zweite Matrize aufweist. Dabei sind die Matrizen relativ zu den Stempeln derart bewegbar, dass die Vorrichtung in eine Offenstellung und in eine Schließstellung bewegbar ist, und dass die Vorrichtung außerdem bewegbar ist in eine Press-Lage, bei der die erste Matrize dem Press-Stempel und die zweite Matrize dem Spritz-Stempel zugeordnet ist, und in eine Gieß-Lage, bei der die erste Matrize dem Spritz-Stempel zugeordnet ist. Dabei sind die Matrizen und die Stempel derart angeordnet, dass bei Vorliegen von Press-Lage und Offenstellung ein Dekorwerkstück zwischen Press-Stempel und erste Matrize einbringbar ist. Außerdem sind der Press-Stempel und die erste Matrize derart aufeinander abgestimmt ausgebildet, dass bei Vorliegen der Press-Lage und der Schließstellung eine Pressform derart bereit gestellt wird, dass ein Dekorwerkstück formpressbar ist und in der ersten Matrize formbindbar ist. Außerdem sind die erste Matrize und der Spritz-Stempel derart aufeinander abgestimmt ausgebildet, dass bei Vorliegen der Gieß-Lage und der Schließstellung eine Hinterspritzform zum Hinterspritzen des Dekorwerkstücks mit einem Trägerstoff gebildet wird. Die zweite Matrize und der Spritz-Stempel sind schließlich derart aufeinander abgestimmt ausgebildet, dass bei Vorliegen der Press-Lage und der Schließstellung eine Überspritzform zum Überspritzen des Dekorwerkstücks mit einem Schutzstoff gebildet wird.

Da zwei Stempel und zwei Matrizen vorgesehen sind, kann mit der erfindungsgemäßen Vorrichtung einerseits durch Bewegen in Schließ-Stellung und in Press-Lage eine Pressform für ein Dekorwerkstück und gleichzeitig eine Überspritzform für ein weiteres Dekorwerkstück bereit gestellt werden. Andererseits kann durch Bewegen in Schließ-Stellung und Gieß-Lage eine Hinterspritzform bereit gestellt werden. Dabei kann gleichzeitig der zweiten Matrize ein eventuell fertig gestelltes Formzierteile entnommen werden. Die erfindungsgemäße Vorrichtung ist daher speziell dazu ausgelegt, das erfindungsgemäße Verfahren mit den weiter oben geschilderten Vorteilen durchzuführen.

Besonders bevorzugt ist dabei, wenn der Press-Stempel und die erste Matrize derart ausgebildet sind, dass in der Press-Lage ausgehend von der Offenstellung beim Bewegen in die Schließstellung solche Abschnitte eines eingebrachten Dekorwerkstücks abgequetscht werden, welche die Pressform überragen. Wie bereits vorstehend zum Verfahren erläutert, wirkt das Abquetschen der überstehenden Abschnitte unterstützend, um das Dekorwerkstück beim Formpressen in der ersten Matrize formzubinden.

Zur vorteilhaften Ausgestaltung ist vorgesehen, dass der Press-Stempel derart auf die erste Matrize abgestimmt ausgebildet ist, dass bei Vorliegen von Press-Lage und Schließstellung ein eingebrachtes Dekorwerkstück an die erste Matrize anliegend angepresst wird, und der Spritz-Stempel derart ausgebildet ist, dass in Gieß-Lage und Schließstellung zwischen erster Matrize und Spritz-Stempel ein Formholraum gebildet wird, welcher die Hinterspritzform bereit stellt. Da die Hinterspritzform den Spritz-Stempel umfasst, kann eine Formbindung des Werkstücks nach dem Hinterspritzvorgang an den Spritz-Stempel durch den aushärtenden Trägerstoff selbst erreicht werden. Dies ist für die Durchführung des erfindungsgemäßen Verfahrens vorteilhaft, welches die Formbindung des Werkstückes an den Spritz-Stempel erfordert.

Bevorzugterweise ist vorgesehen, dass der Spritz-Stempel einen ersten Einspritzkanal zum Einspritzen des Trägerstoffes und die zweite Matrize einen zweiten Einspritzkanal zum Einspritzen des Schutzstoffes aufweist. Die Vorrichtung weist folglich für die beiden Spritzgießmaterialen (Trägerstoff und Schutzstoff) zwei vollständig getrennte Bereitstellungssysteme auf. Dadurch wird einerseits verhindert, dass sich die Materialien vermischen, was zu unerwünschten chemischen Reaktionen und damit zu Qualitätseinbußen führen kann. Außerdem treten im Bereich der Einspritzkanäle häufig Verunreinigungen und/oder Verkrustungen auf, was Wartungs- und Reinigungsarbeiten notwendig machen kann. Diese Arbeiten werden durch die beschriebene separate Ausgestaltung der Spritzgießsysteme erheblich vereinfacht. Durch die getrennte Ausbildung der beiden Einspritzsysteme wird ferner ermöglicht, die Spritzgießmaterialien zum Hinterspritzen und Überspritzen bei verschiedenen Temperaturen bereitzustellen.

Als weitere vorteilhafte Ausgestaltung ist vorgesehen, dass die erste Matrize eine gerundete Quetschkante und der Press-Stempel eine Gegenkante aufweist, wobei die Gegenkante bei Vorliegen der Press-Lage und der Schließstellung von der Quetschkante einen als Quetschmaß festgelegten Abstand aufweist. Dadurch kann erreicht werden, dass bei dem oben beschriebenen Abquetschen von den die Pressform überragenden Abschnitten eines Dekorwerkstückes diese nicht durch Schneiden abgetrennt werden. Insbesondere dringt bei der hier beschriebenen Ausführungsform keine Kante zur Abtrennung des Materials in dieses ein. Wie vorstehend bereits erläutert, ergibt sich dadurch zum Einen ein stetiger Übergang zwischen Dekorwerkstück und Spitzgießmaterialien, zum Anderen wird durch das Abquetschen das Dekorwerkstück in der ersten Matrize entlang seines Umfangs formgebunden.

Bevorzugterweise ist bei der erfindungsgemäßen Vorrichtung eine Heizvorrichtung für den Press-Stempel vorgesehen. Ein Erwärmen des Press-Stempel ist vorteilhaft, um eine zerstörungsfreie und dauerhafte Formgebung des Dekorwerkstücks in der Pressform zu ermöglichen. Ferner kann durch eine erhöhte Temperatur ein eventuell angefeuchtetes Dekorwerkstück getrocknet werden. Da die erfindungsgemäße Vorrichtung zwei Stempel und zwei Matrizen aufweist, können die verschiedenen Stempel und Matrizen jeweils auf verschiedenen Temperaturen gehalten werden.

Zur weiteren Ausgestaltung ist denkbar, dass eine Impulskühlungsvorrichtung für die erste Matrize und/oder den Press-Stempel und/oder den Spritz-Stempel vorgesehen ist. Dadurch können möglicherweise erforderliche Temperaturübergänge zwischen verschiedenen Verfahrenschritten beschleunigt werden, was die Wirtschaftlichkeit des Verfahrens erhöht.

Der Press-Stempel sowie der Spritz-Stempel sind vorteilhafterweise an einem gemeinsamen Rahmen, und die erste Matrize sowie die zweite Matrize an einem gemeinsamen Träger angeordnet. Dabei ist der Träger relativ zum Rahmen derart verfahrbar, dass die Vorrichtung zwischen Offenstellung und Schließstellung und/oder zwischen Press-Lage und Gieß-Lage bewegbar ist. Insbesondere ist der Träger relativ zum Rahmen entlang einer Achse verfahrbar zum Bewegen der Vorrichtung zwischen Offenstellung und Schließstellung, und entlang einer weiteren Achse verfahrbar zum Bewegen der Vorrichtung zwischen Press-Lage und Gieß-Lage.

Weitere Einzelheiten und vorteilhafte Ausgestaltung der Erfindung sind der folgenden Beschreibung zu entnehmen, an Hand derer die in den Figuren dargestellte Ausführungsform der Erfindung näher beschrieben und erläutert ist.

In den Figuren 1 bis 7 ist eine schematische Darstellung einer erfindungsgemäßen Vorrichtung gezeigt, wobei in der Sequenz der Figuren 1 bis 7 beispielhaft die verschiedenen Arbeitsschritte des erfindungsgemäßen Verfahrens dargestellt sind. Im Einzelnen zeigen:

Figur 1: Die Vorrichtung in Offenstellung und Press-Lage; Einlegen eines ersten Werkstückes;

Figur 2: Die Vorrichtung aus Figur 1 beim Öffnen aus der Schließstellung; nach Formpressen des ersten Werkstückes;

Figur 3: Die Vorrichtung in Offenstellung und Gieß-Lage; wobei das erste Werkstück in der ersten Matrize formgebunden ist;

Figur 4: Vorrichtung in Schließstellung und Gieß-Lage; Hinterspritzen des ersten Werkstückes;

Figur 5: Vorrichtung in Offenstellung und Press-Lage; wobei das erste Werkstück am Spritz-Stempel formgebunden ist und ein zweites Werkstück eingelegt wird;

Figur 6: Vorrichtung in Schließstellung und Press-Lage; Überspritzen des ersten Werkstückes und Formpressen des zweiten Werkstückes;

Figur 7: Vorrichtung in Offenstellung und Press-Lage; wobei das zweite Werkstück in der ersten Matrize formgebunden ist.

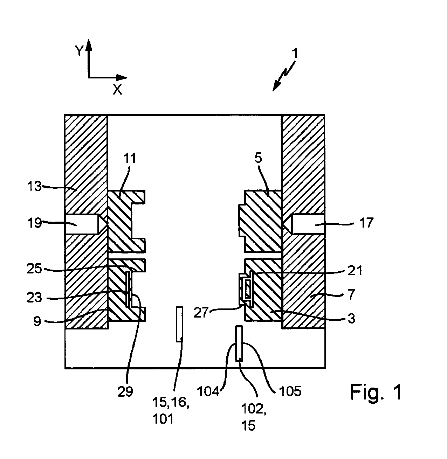

Zur besseren Übersichtlichkeit sind in den Figuren 1 bis 7 einander entsprechende Teile mit gleichen Bezugszeichen gekennzeichnet.

Die in Figur 1 gezeigte erfindungsgemäße Vorrichtung 1 hat einen Press-Stempel 3 und einen Spritz-Stempel 5, welche an einem gemeinsamen Rahmen 7 unbeweglich angeordnet sind. Die Vorrichtung 1 weist ferner eine erste Matrize 9 und eine zweite Matrize 11 auf, die nebeneinander an einem Träger 13 angeordnet sind. Der Träger 13 ist relativ zum Rahmen 7 entlang einer Achse X und einer Achse Y bewegbar. Bei Bewegung des Träger 13 gegenüber dem Rahmen 7 werden demnach beide Matrizen 9, 11 parallel relativ zu den Stempeln 3, 5 bewegt.

In der Figur 1 ist der Träger 13 entlang der Achse x vom Rahmen 7 derart beabstandet, dass zwischen den Stempeln 3, 5 und den Matrizen 9, 11 ein Dekorrohling 16 als Dekorwerkstück 15 einbringbar ist - die Vorrichtung befindet sich folglich in Offenstellung. Ferner ist die Position des Trägers 13 entlang der Y-Achse derart gewählt, dass die erste Matrize 9 dem Press-Stempel 3 längs der X-Achse gegenüber liegt und diesem zugeordnet ist - die Vorrichtung 1 befindet sich in Press-Lage.

Im Hinblick auf das weiter unten geschilderte Verfahren sind in den Figuren 1 bis 7 jeweils zwei Dekorwerkstücke 15 dargestellt - nämlich ein erstes Werkstück 101 und ein zweites Werkstück 102. Jeder der Dekorwerkstücke 15 weist eine Sichtseite 104 mit hoher optischer Qualität und eine Trägerseite 105 auf.

Der Spritz-Stempel 5 weist einen schematisch dargestellten Einspritzkanal 17 zum Einspritzen eines Trägerstoffes auf. Als Trägerstoff dient hier Kunstharz, welches in flüssiger Form von einem nicht dargestellten Kunststoff-Schmelzsystem bereitgestellt wird.

In ähnlicher Weise sieht die zweite Matrize 11 einen Einspritzkanal 19 zum Einspritzen eines Schutzstoffes (hier: Polyurethan-Kunststoff) vor, welcher vom einem weiteren, nicht dargestellten Kunststoff-Schmelzsystem gespeist wird.

Der Press-Stempel 3 weist eine Heizvorrichtung 21 auf, mittels welcher die Temperatur des Press-Stempels 3 auf circa 130 °C erhöht werden kann. Für die erste Matrize 9 ist dem gegenüber eine Impulskühlungsvorrichtung 23 vorgesehen, mit der die Temperatur bei Bedarf in kurzer Zeit von über 100 °C auf 80 °C reduzierbar ist.

Die erste Matrize 9 umfasst einen Hohlprofilabschnitt 29, mittels welchem für das Dekorwerkstück 15 die gewünschte dreidimensionale Endform des herzustellenden Formzierteils im Wesentlichen vorgebbar ist. Der Hohlprofilabschnitt 29 wird durch eine Quetschkante 25 begrenzt, welche abgerundet ist. Der Press-Stempel 3 ist entsprechend auf den Hohlprofilabschnitt 29 abgestimmt ausgebildet und weist der Quetschkante 25 zugeordnet eine Gegenkante 27 auf.

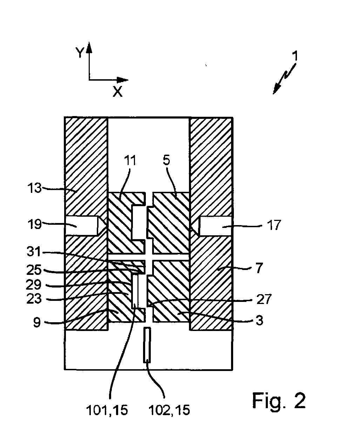

Ausgehend von der in Figur 1 gezeigten Lage (Press-Lage und Offenstellung) ist in der Figur 2 der Träger 13 derart relativ zum Rahmen 7 entlang der X-Achse bewegt, dass der Press-Stempel 3 in den Hohlprofilabschnitt 29 der ersten Matrize 9 eingreift. Die Vorrichtung 1 befindet sich dann in der Schließstellung und in der Press-Lage. Zur besseren Übersichtlichkeit ist in Figur 2 der Träger 13 wieder ein kleines Stück entgegen der X-Achse in Richtung der Offenstellung verfahren.

Bei Vorliegen der Schließstellung und Press-Lage wird durch den Press-Stempel 3 und die erste Matrize 9 eine Press-Form 31 gebildet, in welcher ein Dekorwerkstück 15 formgepresst werden kann und dabei in der ersten Matrize 9 formgebunden werden kann.

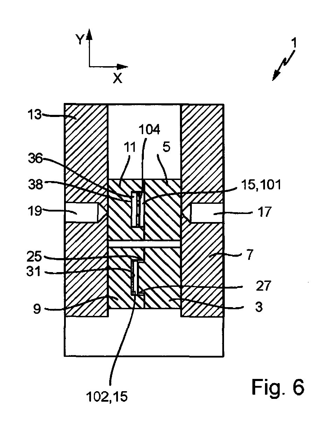

In Figur 2 ist ferner erkennbar, dass bei vorliegen der Press-Lage und Schließstellung zwischen der Gegenkante 27 am Pressstempel 3 und der Quetschkante 25 an der ersten Matrize 9 ein Spalt entsteht. Dieser Spalt ist jedoch schmal genug gewählt, dass durch Bewegen der Vorrichtung 1 ausgehend von der in Figur 1 gezeigten Lage in die Schließstellung solche Abschnitte des Dekorwerkstückes 15 abgequetscht werden, welche die Pressform 31 überragen. Das Dekorwerkstück 15 wird folglich gerade nicht beispielsweise mittels zweier Fluchten der Kanten zugeschnitten. Ebenso ist keine Tauchkante vorgesehen, die zum Abtrennen der überragenden Abschnitte in das Dekormaterial eindringt. Die Breite des entstehenden Spaltes zwischen Gegenkante 27 und Quetschkante 25 bei vorliegen der Pressform 31 wird als Quetschmaß bezeichnet. Eine weitere Darstellung der Vorrichtung 1 in Schließstellung und Press-Lage ist in der weiter unten beschriebenen Figur 6 gezeigt, wo deutlich der Spalt zwischen Gegenkante 27 und Quetschkante 25 und das Quetschmaß erkennbar ist.

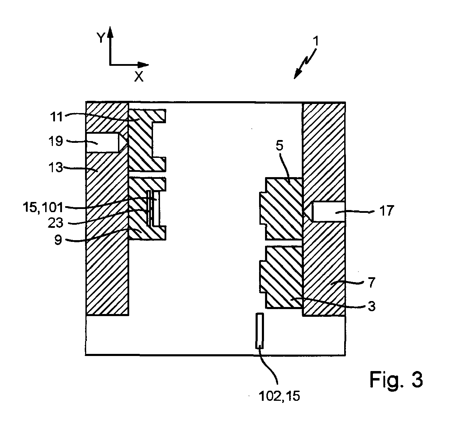

In der Figur 3 ist die Vorrichtung 1 wiederrum in Offenstellung gezeigt. Zusätzlich wurde der Träger 13 entlang der Y-Achse derart nach oben verfahren, dass die erste Matrize nun dem Spritz-Stempel 5 entlang der X-Achse gegenüber liegt und diesem zugeordnet ist - die Vorrichtung 1 befindet sich in der Gieß-Lage (und Offenstellung). Außerdem ist erkennbar, dass ein Dekorwerkstück 1 als erstes Werkstück 101 in der ersten Matrize 9 formgebunden ist.

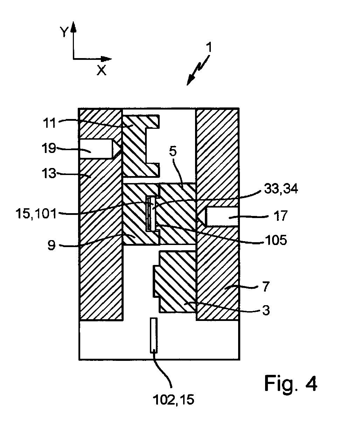

Die Figur 4 zeigt die Vorrichtung 1 in Gieß-Lage, wobei ausgehend von Figur 3 der Träger 13 entlang der X-Achse derart zum Rahmen 7 bewegt wurde, dass die Schließstellung vorliegt. In der ersten Matrize 9 ist ein als erstes Werkstück 101 formgebundenes Dekorwerkstück 15 gezeigt.

Der nun der zweiten Matrize 9 zugeordnete Spritz-Stempel 5 ist derart ausgebildet, dass in der dargestellten Schließstellung und Gieß-Lage zwischen der ersten Matrize 9 und dem Spritz-Stempel 5 ein Formhohlraum 33 gebildet wird. Dabei wird zwischen dem Spritz-Stempel 5 und der Trägerseite 105 des formgebundenen ersten Werkstückes 101 eine Hinterspritzform 34 gebildet. In die Hinterspritzform 34 ist durch den Einspritzkanal 17 Kunstharz als Trägerstoff einspritzbar (Hinterspritzvorgang, siehe unten).

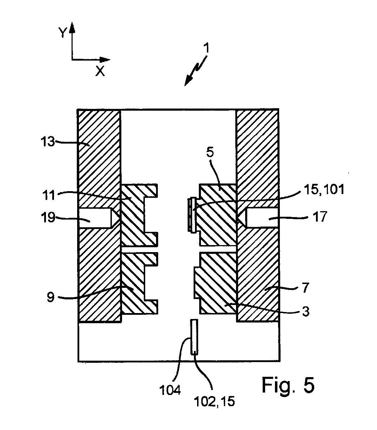

In Figur 5 befindet sich die Vorrichtung 1 wieder in der Offenstellung und Press-Lage (vergleiche Figur 1). Das erste Werkstück 101 ist am Spritz-Stempel 5 formgebunden. Die erste Matrize 9 ist wieder frei.

Die Figur 6 zeigt die Vorrichtung 1 in Schließstellung und Press-Lage (vergleiche Figur 2). Zwischen Press-Stempel 3 und erster Matrize 9 wird wiederrum die Pressform 31 bereitgestellt. Dabei ist deutlich erkennbar, dass die Gegenkante 27 des Press-Stempels 3 von der Quetschkante 25 der ersten Matrize 9 um ein Quetschmaß beabstandet ist (wie vorstehend zu Figur 2 bereits erläutert). In der Pressform 31 ist nun das zweite Werkstück 102 formgepresst dargestellt.

Die zweite Matrize 11 weist ähnlich wie die erste Matrize 9 einen Hohlprofilabschnitt 38 auf. Dieser ist derart auf den Spritz-Stempel 5 abgestimmt und/oder der Pressform 31 entsprechend ausgebildet, dass zwischen der Sichtseite 104 des am Spritz-Stempel 5 formgebundenen ersten Werkstückes 101 und der zweiten Matrize 11 eine Überspritzform 36 bereitgestellt wird. Zum Überspritzen kann die Überspritzform 36 über den Einspritzkanal 19 mit dem Schutzstoff befüllt werden.

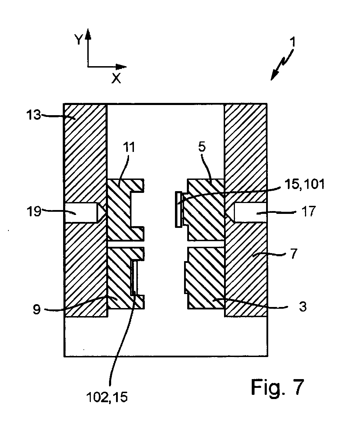

Schließlich zeigt Figur 7 die Vorrichtung 1 in der Offenstellung und Press-Lage (vergleiche Figuren 1, 5). Erkennbar ist das zweite Werkstück 102, welches in der ersten Matrize 9 formgebunden ist. Ferner ist das erste Werkstück 101 dargestellt, welches als fertiges Formzierteil der Vorrichtung 1 entnommen werden kann.

Unter Bezugnahme auf die Figuren 1 bis 7 wird im folgenden das erfindungsgemäße Verfahren beispielhaft erläutert.

Zunächst befindet sich die Vorrichtung 1 in Offenstellung und Press-Lage, wie in Figur 1 dargestellt. In dieser Situation wird ein Dekorrohling 15 als erstes Werkstück 101 derart in die Vorrichtung 1 eingebracht, dass die Sichtseite 104 des ersten Werkstücks 101 der ersten Matrize 9 zugewandt ist.

Im folgenden Verfahrensschritt wird die Vorrichtung 1 ausgehend von der in Figur 1 dargestellten Lage in die Schließstellung (unter Beibehaltung der Press-Lage) bewegt. In einer beispielhaften Ausgestaltung des Verfahrens wird hierbei der Press-Stempel 3 mittels der Heizvorrichtung 21 auf circa 130 °C aufgeheizt. Beim Bewegen in Schließstellung greift der Press-Stempel 3 in den Hohlprofilabschnitt 29 der ersten Matrize 9 ein. Dadurch wird das erste Werkstück 101 derart an die erste Matrize 9 angepresst, dass die Sichtseite 104 des ersten Werkstücks 101 an der ersten Matrize 9 zum Anliegen kommt. Sollten dabei Abschnitte des ersten Werkstückes 101 die Pressform 31 überragen, so quetscht die Quetschkante 25 den Übergangsbereich des Dekormaterials zu diesen Abschnitten derart gegen die Gegenkante 27, dass diese Abschnitte abgequetscht werden, wenn die Sichtseite 104 an der ersten Matrize 9 anliegt. Im Ergebnis wird das erste Werkstück 101 in der ersten Matrize 9 formgepresst und formgebunden.

Das Formpressen wird dadurch begünstigt, dass der Press-Stempel 3 mittels der Heizvorrichtung 21 beheizt wird. Durch die erhöhte Temperatur wird außerdem während des Verfahrensschrittes zum Formpressen das erste Werkstück 101 getrocknet.

Der gesamte Verfahrensschritt zum Formpressen erfolgt über einer Zeitdauer T1, welche typischerweise im Bereich 10 Sekunden liegt.

Nach der Zeitdauer T1 wird der Träger 13 wieder entgegen der X-Achse in Richtung Offenstellung bewegt. Die Figur 2 zeigt eine Momentaufnahme kurz nach dem Ende des Verfahrensschritts zum Formpressen.

Im Anschluss hieran wird die Vorrichtung 1 wie in Figur 3 dargestellt in Gieß-Lage bewegt. Dabei verbleibt das erste Werkstück 101 in der ersten Matrize 9 formgebunden. Während dieses Verfahrensschrittes wird die erste Matrize 9 mittels der Impulskühlungsvorrichtung 23 auf circa 90 °C abgekühlt. Dieser Temperaturwert ermöglicht eine optimale Materialverbindung während des folgenden Hinterspitzvorgangs.

Wie in Figur 4 dargestellt, wird nach Erreichen der Gieß-Lage die Vorrichtung 1 ausgehend von der Offenstellung in die Schließstellung bewegt. Dadurch wird zwischen der Trägerseite 105 des ersten Werkstückes 101 und dem Spritz-Stempel 5 die Hinterspritzform 34 gebildet. Über eine Zeitspanne T2 wird dann durch den Einspritzkanal 17 der Trägerstoff in die Hinterspritzform 34 gespritzt. Dieser Verfahrensschritt zum Hinterspritzen kann verhältnismäßig schnell über eine kurze Zeitdauer T2 kleiner als T1 (T2 im Bereich von wenigen Sekunden) erfolgen. Der Trägerstoff wird dabei bei einer Temperatur von circa 90°C bereitgestellt. Da die erste Matrize 9 vor dem Hinterspritzen mit der Impulskühlvorrichtung 23 (vergleiche Figur 1, 3) auf circa 90 °C abgekühlt wurde, wird eine optimale Verbindung der Materialen gewährleistet.

Durch das Aushärten des Trägerstoffes in der Hinterspritzform 34 wird das erste Werkstück 101 entlang der Trägerseite 105 am Spritz-Stempel 5 formgebunden. Beim erneuten Bewegen der Vorrichtung 1 in Offenstellung verbleibt somit das erste Werkstück 101 am Spritz-Stempel 5 und die erste Matrize 9 wird wieder frei.

Daraufhin wird, wie in Figur 5 dargestellt, die Vorrichtung 1 in Offenstellung und zurück in Press-Lage bewegt. Dabei verbleibt das erste Werkstück 101, wie oben erläutert, am Spritz-Stempel 5 formgebunden. In die Vorrichtung 1 kann dann erneut ein Dekorwerkstück 15 als zweites Werkstück 102 derart eingebracht werden, dass die Sichtseite 104 der ersten Matrize 9 zugewandt ist.

Die Vorrichtung 1 wird daraufhin in die Schließstellung bewegt, wie in Figur 6 dargestellt. Dabei wird das am Spritzstempel 5 formgebundene erste Werkstück 101 in den Hohlprofilabschnitt 38 der zweiten Matrize 11 eingebracht, wodurch zwischen der Sichtseite 104 des ersten Werkstückes 101 und der zweiten Matrize 11 die Überspritzform 36 entsteht. Der Überspritzform 36 wird über den Einspritzkanal 19 der Schutzstoff zum Überspritzen des Dekorwerkstücks 15 zugeführt.

Gleichzeitig wird, wie vorstehend für das erste Werkstück 101 beschrieben, das zweite Werkstück 102 in der ersten Matrize 9 formgepresst und formgebunden. Dabei werden wiederrum die überstehenden Abschnitte, wie vorstehend erläutert, abgequetscht.

Die Verfahrensschritte zum Formpressen und Formbinden des zweiten Werkstückes 102 und zum Überspritzen des ersten Werkstückes 101 laufen dabei parallel über die Zeitdauer T1 ab.

Schließlich wird die Vorrichtung, wie in Figur 7 dargestellt, wieder in die Offenstellung bewegt. Das zweite Werkstück 102 ist entsprechend dem ersten Werkstück 101 in den Figuren 2 und 3 in der ersten Matrize 9 formgebunden. Das erste Werkstück 101 ist nun ein fertiges Formzierteil, welches eine im Wesentlichen durch die Pressform 31 vorgegebene dreidimensionale Form hat, zur Stabilisierung und Montage mit Trägerstoff hinterspritzt und auf der Sichtseite 105 mit einem Schutzstoff überzogen ist. Das fertiges Formzierteil kann in der in Figur 7 gezeigten Situation der Vorrichtung 1 entnommen werden und das Verfahren kontinuierlich fortgesetzt werden.

## Patentansprüche

1. Verfahren zum Herstellen von Formzierteilen, wobei die folgenden Schritte nacheinander durchlaufen werden:
i) Formpressen eines eine Sichtseite (104) und eine Trägerseite (105) aufweisenden Dekorrohlings (16) als erstes Werkstück (101)in einer Pressform (31), welche einen Press-Stempel (3)und eine ersten Matrize (9) umfasst, derart, dass das erste Werkstück (101) nach dem Formpressen in der ersten Matrize (9) formgebunden ist,
ii) Transfer der ersten Matrize (9) zu einem Spritz-Stempel (5) und Hinterspritzen des ersten Werkstückes (101) auf der Trägerseite (105) mit einem Trägerstoff in einer Hinterspritzform (34), welche die erste Matrize (9) und den Spritz-Stempel (5)umfasst, wobei nach dem Hinterspritzen das erste Werkstück (101) an dem Spritz-Stempel (5) formgebunden verbleibt,
iii) Transfer des Spritz-Stempels (5) zu einer zweiten Matrize (11) und Überspritzen des ersten Werkstückes (101) auf der Sichtseite (104) mit einem Schutzstoff in einer Überspritzform (36), welche den Spritz-Stempel (5) und die zweite Matrize (11) umfasst, wobei im selben Verfahrensschritt ein weiterer Dekorrohling (15) als zweites Werkstück (102) in der ersten Matrize (9) in einer dem ersten Verfahrensschritt entsprechenden Weise mit dem Press-Stempel (3) formgepresst und formgebunden wird und danach das Verfahren für das zweite Werkstück (102) in gleicher Weise durchgeführt wird wie für das erste Werkstück (101).

2. Verfahren zum Herstellen von Formzierteilen nach Anspruch 1 in einer Vorrichtung (1), welche einen Press-Stempel (3) und eine erste Matrize (9) zur Vorgabe einer Pressform (31) sowie einen Spritz-Stempel (5) und eine zweite Matrize (11) aufweist, wobei die Matrizen (9, 11) relativ zu den Stempeln (3, 5) derart bewegbar sind, dass die Vorrichtung (1) in eine Offenstellung und eine Schließstellung bewegbar ist und außerdem bewegbar ist in eine Press-Lage, bei der die erste Matrize (9) dem Press-Stempel (3) und die zweite Matrize (11) dem Spritz-Stempel (5) zugeordnet ist, und in eine Gieß-Lage, bei der die erste Matrize (9) dem Spritz-Stempel (5) zugeordnet ist,
wobei zur Durchführung des Verfahrens die folgenden Schritte nacheinander durchlaufen werden:
a) Einbringen eines eine Sichtseite (104) und eine Trägerseite (105) aufweisenden Dekorrohlings (15) als erstes Werkstück (101) in die Vorrichtung in Offenstellung und Press-Lage derart, dass die Sichtseite (104) der ersten Matrize (9) zugewandt ist;
b) Bewegen der Vorrichtung (1) in die Schließstellung zum Formpressen des ersten Werkstücks (101) zwischen Press-Stempel (3) und erster Matrize (9) derart, dass die Sichtseite (104) an der ersten Matrize (9) anliegt;
c) Bewegen der Vorrichtung (1) in Offenstellung und in Gieß-Lage, wobei das erste Werkstücks (101) in der ersten Matrize (9) formgebunden ist;
d) Bewegen der Vorrichtung (1) in die Schließstellung zum Hinterspritzen des ersten Werkstücks (101) auf der Trägerseite (105) mit einem Trägerstoff in einer Hinterspritzform (34), welche im Wesentlichen von Spritz-Stempel (5) und erster Matrize (9) bereitgestellt wird;
e) Bewegen der Vorrichtung (1) in Offenstellung und zurück in Press-Lage, wobei das erste Werkstücks (101) am Spritz-Stempel (5) formgebunden verbleibt;
f) Einbringen eines zweiten Dekorrohlings (15) als zweites Werkstück (102) in einer dem Verfahrenschritt a) für das erste Werkstück (101) entsprechenden Weise;
g) Bewegen der Vorrichtung (1) in die Schließstellung zum Überspritzen des ersten Werkstücks (101) auf der Sichtseite (104) mit einem Schutzstoff in einer Überspritzform (36), welche im Wesentlichen von Spritz-Stempel (5) und der zweiten Matrize (9) in Schließstellung bereitgestellt wird, wobei im selben Verfahrensschritt Formpressen des zweiten Werkstücks (102) in der ersten Matrize (9) in einer dem Verfahrensschritt b) für das erste Werkstück (101) entsprechenden Weise erfolgt und danach das Verfahren für das zweite Werkstück (102) weiter wie für das erste Werkstück (101) durchgeführt wird.

3. Verfahren nach Anspruch 1 oder 2, **dadurch gekennzeichnet, dass** beim Verfahrensschritt zum Formpressen solche Abschnitte des ersten Werkstückes (101) abgequetscht werden, welche die Pressform (31) überragen.

4. Verfahren nach Anspruch 1, 2 oder 3, **dadurch gekennzeichnet, dass** vor dem Hinterspritzen auf die Trägerseite (105) und/oder vor dem Überspritzen auf die Sichtseite (104) eine Verbundschicht aus einem verbindenden Material oder ein Verbundstoff, insbesondere Klebstoff oder reaktiver Schmelzklebstoff, aufgebracht werden.

5. Verfahren nach einem der vorhergehenden Ansprüche, **dadurch gekennzeichnet, dass** bei dem Verfahrensschritt zum Formpressen eine erhöhte Temperatur gegenüber dem Verfahrensschritt zum Hinterspritzen und/oder zum Überspritzen vorgesehen ist.

6. Verfahren nach einem der vorhergehenden Ansprüche, **dadurch gekennzeichnet, dass** nach oder während des Verfahrensschritt zum Formpressen eine Impulskühlung der ersten Matrize (9) und/oder des Press-Stempels (3) erfolgt.

7. Verfahren nach einem der vorhergehenden Ansprüche, **dadurch gekennzeichnet, dass** die Verfahrensschritte zum Formpressen und zum Überspritzen über eine Zeitspanne T1 erfolgen und der Verfahrenschritt zum Hinterspritzen über eine Zeitspanne T2 erfolgt, wobei die Zeitspanne T1 länger ist als die Zeitspanne T2.

8. Verfahren nach einem der vorhergehenden Ansprüche, **dadurch gekennzeichnet, dass** während des Verfahrensschrittes zum Formpressen das Werkstück (101, 102) getrocknet wird.

9. Verfahren nach einem der vorhergehenden Ansprüche, **dadurch gekennzeichnet, dass** vor dem Verfahrensschritt zum Formpressen das Werkstück (101, 102) gefärbt, gebleicht oder zum Lichtschutz behandelt wird.

10. Vorrichtung (1) zum Herstellen von Formzierteilen ausgehend von einem Dekorwerkstück (15), welche einen Press-Stempel (3) und eine erste Matrize (9), sowie einen Spritz-Stempel (5) und eine zweite Matrize (11) aufweist, wobei die Matrizen (9, 11) relativ zu den Stempeln (3, 5) derart bewegbar sind, dass die Vorrichtung (1) in eine Offenstellung und in eine Schließstellung bewegbar ist,
und dass die Vorrichtung (1) außerdem bewegbar ist in eine Press-Lage, bei der die erste Matrize (9) dem Press-Stempel (3) und die zweite Matrize (11) dem Spritz-Stempel (5) zugeordnet ist, und in eine Gieß-Lage, bei der die erste Matrize (9) dem Spritz-Stempel (5) zugeordnet ist,
wobei die Matrizen (9, 11) und die Stempel (3, 5) derart angeordnet sind, dass bei Vorliegen von Press-Lage und Offenstellung ein Dekorwerkstück (15) zwischen Press-Stempel (3) und erste Matrize (9) einbringbar ist,
wobei der Press-Stempel (3) und die erste Matrize (9) derart ausgebildet sind, dass bei Vorliegen von Press-Lage und Schließstellung eine Pressform (31) derart bereitgestellt wird, dass ein Dekorwerkstück (15) formpressbar ist und in der ersten Matrize (9) formbindbar ist,
wobei außerdem die erste Matrize (9) und der Spritz-Stempel (5) derart ausgebildet sind, dass bei Vorliegen von Gieß-Lage und Schließstellung eine Hinterspritzform (34) zum Hinterspritzen des Dekorwerkstücks (15) mit einem Trägerstoff gebildet wird,
und wobei die zweite Matrize (11) und der Spritz-Stempel (5) derart ausgebildet sind, dass bei Vorliegen von Press-Lage und Schließstellung eine Überspritzform (36) zum Überspritzen des Dekorwerkstücks (15) mit einem Schutzstoff gebildet wird.

11. Vorrichtung (1) nach Anspruch 10, **dadurch gekennzeichnet, dass** der Press-Stempel (3) und die erste Matrize (9) derart ausgebildet sind, dass in der Press-Lage ausgehend von der Offenstellung beim Bewegen in die Schließstellung solche Abschnitte eines eingebrachten Dekorwerkstückes (15) abgequetscht werden, welche die Pressform (31) überragen.

12. Vorrichtung (1) nach Anspruch 10 oder 11, **dadurch gekennzeichnet, dass** der Press-Stempel (3) derart auf die erste Matrize (9) abgestimmt ausgebildet ist, dass in Press-Lage und Schließstellung ein eingebrachtes Dekorwerkstück (15) an die erste Matrize (9) anliegend angepresst wird, und der Spritz-Stempel (5) derart ausgebildet ist, dass in Gieß-Lage und Schließstellung zwischen erster Matrize (9) und Spritz-Stempel (5) ein Formhohlraum (33) gebildet wird, welcher die Hinterspritzform (34) bereitstellt.

13. Vorrichtung (1) nach einem der Ansprüche 10 - 12, **dadurch gekennzeichnet, dass** der Spritz-Stempel (5) einen ersten Einspritzkanal (17) zum Einspritzen des Trägerstoffes und die zweite Matrize (11) einen zweiten Einspritzkanal (19) zum Einspritzen des Schutzstoffes aufweist.

14. Vorrichtung (1) nach einem der Ansprüche 10 - 13, **dadurch gekennzeichnet, dass** die erste Matrize (9) eine gerundete Quetschkante (25) und der Press-Stempel (3) eine Gegenkante (27) aufweist, wobei die Gegenkante (27) bei Vorliegen der Press-Lage und der Schließstellung von der Quetschkante (25) einen als Quetschmaß festgelegten Abstand aufweist.

15. Vorrichtung (1) nach einem der Ansprüche 10 - 14, **dadurch gekennzeichnet, dass** eine Heizvorrichtung (21) für den Press-Stempel (3) vorgesehen ist.

16. Vorrichtung (1) nach einem der Ansprüche 10 - 15, **dadurch gekennzeichnet, dass** eine Impulskühlungsvorrichtung (23) für die erste Matrize (9) und/oder den Press-Stempel (3) und/oder den Spritz-Stempel (5) vorgesehen ist.

17. Vorrichtung (1) nach einem der Ansprüche 10 - 16, **dadurch gekennzeichnet, dass** der Press-Stempel (3) sowie der Spritz-Stempel (5) an einem gemeinsamen Rahmen (7) angeordnet sind, und dass die erste Matrize (9) sowie die zweite Matrize (11) an einem gemeinsamen Träger (13) angeordnet sind, wobei der Träger (13) relativ zum Rahmen (7) derart verfahrbar ist, dass die Vorrichtung (1) zwischen Offenstellung und Schließstellung und/oder zwischen Press-Lage und Gieß-Lage bewegbar ist.

## Claims

1. A method for manufacturing decorative molded parts, wherein the following steps are performed in succession:
i) in a compression mold (31), which includes a male compression die (3) and a first female die (9), compression molding of a decorative blank (16), having a visible side (104) and a substrate side (105), as a first workpiece (101), in such a manner that after the compression molding, the first workpiece (101) is shape-bound in the first female die (9);
ii) transferring the first female die (9) to a male injection die (5) and back injection molding of the first workpiece (101) on the substrate side (105) with a substrate material in a back injection mold (34), which includes the first female die (9) and the male injection die (5), and after the back injection molding, the first workpiece (101) remains shape-bound on the male injection die (5);
iii) transferring the male injection die (5) to a second female die (11) and top injection molding of the first workpiece (101) on the visible side (104) with a protective material in a top injection mold (36), which includes the male injection die (5) and the second female die (11), and in the same method step, a further decorative blank (15), as a second workpiece (102), is compression molded and shape-bound in the first female die (9) with the male compression die (3) in a manner corresponding to the first method step, and after that, the method is performed for the second workpiece (102) in the same manner as for the first workpiece (101).

2. The method for manufacturing decorative molded parts according to claim 1, in an apparatus (1) which has a male compression die (3) and a first female die (9) for defining a compression mold (31) and also has a male injection die (5) and a second female die (11), the female dies (9, 11) being movable relative to the male dies (3, 5) in such a manner that the apparatus (1) is movable into an open position and a closed position and is moreover movable into a compression position, in which the first female die (9) is associated with the male compression die (3) and the second female die (11) is associated with the male injection die (5), and into a casting position, in which the first female die (9) is associated with the male injection die (5),
wherein for performing the method, the following steps are performed in succession:
a) introducing a decorative blank (15), as a first workpiece (101), having a visible side (104) and a substrate side (105), into the apparatus in the open position and compression position in such a manner that the visible side (104) faces toward the first female die (9);
b) moving the apparatus (1) into the closed position for compression molding of the first workpiece (101) between the male compression die (3) and the first female die (9) in such a manner that the visible side (104) contacts the first female die (9);
c) moving the apparatus (1) into the open position and the casting position, the first workpiece (101) being shape-bound in the first female die (9);
d) moving the apparatus (1) into the closed position for back injection molding of the first workpiece (101) on the substrate side (105) with a substrate material in a back injection mold (34), which is furnished essentially by the male injection die (5) and the first female die (9);
e) moving the apparatus (1) into the open position and back into the compression position, the first workpiece (101) remaining shape-bound on the male injection die (5);
f) introducing a second decorative blank (15) as a second workpiece (102) in a manner corresponding to method step a) for the first workpiece (101);
g) moving the apparatus (1) into the closed position for top injection molding of the first workpiece (101) on the visible side (104) with a protective material in a top injection mold (36), which is furnished essentially by the male injection die (5) and the second female die (9) in the closed position, and in the same method step, compression molding of the second workpiece (102) in the first female die (9) is performed in a manner corresponding to method step b) for the first workpiece (101), and after that, the method is further performed for the second workpiece (102) as for the first workpiece (101).

3. The method according to claim 1 or 2, **characterized in that** in the method step for the compression molding, those portions of the first workpiece (101) that project past the compression mold (31) are pinched off.

4. The method according to claim 1, 2 or 3, **characterized in that** a composite layer of a binding material or a composite material, in particular adhesive or reactive hot melt adhesive, is applied to the substrate side (105) before the back injection molding and/or to the visible side (104) before the top injection molding.

5. The method according to one of the foregoing claims, **characterized in that** in the method step for the compression molding, an elevated temperature, compared to the method step for the back injection molding and/or for the top injection molding, is provided.

6. The method according to one of the foregoing claims, **characterized in that** after or during the method step for the compression molding, pulsed cooling of the first female die (9) and/or of the male compression die (3) is effected.

7. The method according to one of the foregoing claims, **characterized in that** the method steps for the compression molding and for the top injection molding are effected over a time period T1, and the method step for the back injection molding is effected over a time period T2, and the time period T1 is longer than the time period T2.

8. The method according to one of the foregoing claims, **characterized in that** during the method step for the compression molding, the workpiece (101, 102) is dried.

9. The method according to one of the foregoing claims, **characterized in that** before the method step for the compression molding, the workpiece (101, 102) is dyed, bleached, or treated for light-fastness.

10. An apparatus (1) for manufacturing decorative molded parts from a decorative workpiece (15), which apparatus has a male compression die (3) and a first female die (9) as well as a male injection die (5) and a second female die (11), the female dies (9, 11) being movable relative to the male dies (3, 5) in such a manner that the apparatus (1) is movable into an open position and into a closed position,
and in such a manner that the apparatus (1) is moreover movable into a compression position, in which the first female die (9) is associated with the male compression die (3) and the second female die (11) is associated with the male injection die (5), and into a casting position, in which the first female die (9) is associated with the male injection die (5),
wherein the female dies (9, 11) and the male dies (3, 5) are disposed in such a manner that in the compression position and the open position, a decorative workpiece (15) can be introduced between the male compression die (3) and the first female die (9);
wherein the male compression die (3) and the first female die (9) are embodied such that in the compression position and the closed position, a compression mold (31) is furnished in such a manner that a decorative workpiece (15) can be compression molded and can be shape-bound in the first female die (9);
wherein furthermore the first female die (9) and the male injection die (5) are embodied such that in the casting position and the closed position, a back injection mold (34) for back injection coating of the decorative workpiece (15) with a substrate material is formed;
and wherein the second female die (11) and the male injection die (5) are embodied such that in the compression position and the closed position, a top injection mold (36) for top injection coating of the decorative workpiece (15) with a protective material is formed.

11. The apparatus (1) according to claim 10, **characterized in that** the male compression die (3) and the first female die (9) are embodied such that in the compression position, upon moving from the open position to the closed position, those portions of an introduced decorative workpiece (15) that project past the compression mold (31) are pinched off.

12. The apparatus (1) according to claim 10 or 11, **characterized in that** the male compression die (3) is embodied as adapted to the first female die (9) in such a manner that in the compression position and the closed position, an introduced decorative workpiece (15) is pressed against the first female die (9) and contacting it, and the male injection die (5) is embodied such that in the casting position and the closed position, a mold cavity (33), which forms the back injection mold (34), is formed between the first female die (9) and the male injection die (5).

13. The apparatus (1) according to one of claims 10-12, **characterized in that** the male injection die (5) has a first injection channel (17) for injecting the substrate material, and the second female die (11) has a second injection channel (19) for injecting the protective material.

14. The apparatus (1) according to one of claims 10-13, **characterized in that** the first female die (9) has a rounded pinch-off edge (25) and the male compression die (3) has a counterpart edge (27), and in the compression position and the closed position, the counterpart edge (27) is spaced apart from the pinch-off edge (25) by what is defined as the pinch-off measurement.

15. The apparatus (1) according to one of claims 10-14, **characterized in that** a heater (21) is provided for the male compression die (3).

16. The apparatus (1) according to one of claims 10-15, **characterized in that** a pulsed cooling device (23) is provided for the first female die (9) and/or the male compression die (3) and/or the male injection die (5).

17. The apparatus (1) according to one of claims 10-16, **characterized in that** the male compression die (3) and the male injection die (5) are disposed on a common frame (7), and that both the first female die (9) and the second female die (11) are disposed on a common carrier (13), and the carrier (13) can travel relative to the frame (7) in such a manner that the apparatus (1) is movable between the open position and the closed position and/or between the compression position and the casting position.

## Revendications

1. Procédé de fabrication de pièces décoratives moulées, les étapes ci-dessous étant réalisées de façon consécutive:
i) le moulage par compression d'une ébauche de décor (16) présentant une face visible (104) et une face de support (105), comme première pièce (101), dans un moule de compression (31), lequel comporte un vérin de compression (3) et une première matrice (9), de telle sorte que la première pièce (101) est mise en forme dans la première matrice (9) après le moulage par compression,
ii) le transfert de la première matrice (9) vers un vérin d'injection (5) et le moulage par injection de la première pièce (101) sur la face de support (105) au moyen d'un support dans un moule de moulage par injection (34), lequel comporte la première matrice (9) et le vérin d'injection (5), la première pièce (101) restant mise en forme sur le vérin d'injection (5) après le moulage par injection,
iii) le transfert du vérin d'injection (5) vers une seconde matrice (11) et le surmoulage par injection de la première pièce (101) sur la face visible (104) au moyen d'un inhibiteur dans un moule de surmoulage par injection (36), lequel comporte le vérin d'injection (5) et la seconde matrice (11), une autre ébauche de décor (15) comme seconde pièce (102) étant moulée par compression et mise en forme dans la première matrice (9) au moyen du vérin de compression (3) au cours de la même étape de procédé d'une manière correspondant à celle de la première étape de procédé puis le procédé étant mis en oeuvre pour la seconde pièce (102) de la même façon que pour la première pièce (101).

2. Procédé de fabrication de pièces décoratives moulées selon la revendication 1 dans un dispositif (1), lequel comprend un vérin de compression (3) et une première matrice (9) pour prédéfinir un moule de compression (31) et un vérin d'injection (5) et une seconde matrice (11), les matrices (9, 11) étant mobiles par rapport aux vérins (3, 5), de telle sorte que le dispositif (1) est mobile dans une position d'ouverture et dans une position de fermeture et est par ailleurs mobile dans une position de compression, dans laquelle la première matrice (9) est associée au vérin de compression (3) et la seconde matrice (11) est associée au vérin d'injection (5), et dans une position de coulée, dans laquelle la première matrice (9) est associée au vérin d'injection (5),
les étapes ci-dessous étant réalisées de façon consécutive pour mettre en oeuvre le procédé:
a) l'introduction d'une ébauche de décor (15) comprenant une face visible (104) et une face de support (105), comme première pièce (101), dans le dispositif dans la position d'ouverture et dans la position de compression, de telle sorte que la face visible (104) est tournée vers la première matrice (9) ;
b) le déplacement du dispositif (1) dans la position de fermeture pour le moulage par compression de la première pièce (101) entre le vérin de compression (3) et la première matrice (9), de telle sorte que la face visible (104) repose contre la première matrice (9);
c) le déplacement du dispositif (1) dans la position d'ouverture et dans la position de coulée, la première pièce (101) étant mise en forme dans la première matrice (9);
d) le déplacement du dispositif (1) dans la position de fermeture pour le moulage par injection de la première pièce (101) sur la face de support (105) au moyen d'un support dans un moule de moulage par injection (34), lequel est fourni sensiblement par le vérin d'injection (5) et la première matrice (9);
e) le déplacement du dispositif (1) dans la position d'ouverture et son retour dans la position de compression, la première pièce (101) restant mise en forme sur le vérin d'injection (5);
f) l'introduction d'une seconde ébauche de décor (15) comme seconde pièce (102) d'une manière correspondant à l'étape de procédé a) pour la première pièce (101);
g) le déplacement du dispositif (1) dans la position de fermeture pour le surmoulage par injection de la première pièce (101) sur la face visible (104) au moyen d'un inhibiteur dans un moule de surmoulage par compression (36), lequel est fourni sensiblement par le vérin d'injection (5) et la seconde matrice (9) dans la position de fermeture, le moulage par compression de la seconde pièce (102) dans la première matrice (9) étant mis en oeuvre au cours de la même étape de procédé d'une manière correspondant à celle de l'étape de procédé b) pour la première pièce (101) puis le procédé pour la seconde pièce (102) continuant d'être mis en oeuvre de la même façon que pour la première pièce (101).

3. Procédé selon la revendication 1 ou 2, **caractérisé en ce que**, lors de l'étape de procédé destinée au moulage par compression, des sections de la première pièce (101) faisant saillie du moule de compression (31) sont écrasées.

4. Procédé selon la revendication 1, 2 ou 3, **caractérisé en ce qu'**une couche composite constituée d'un matériau de liaison ou d'un matériau composite, en particulier de colle ou d'une colle à chaud réactive, est appliquée avant le moulage par injection sur la face de support (105) et/ou avant le surmoulage par injection sur la face visible (104).

5. Procédé selon l'une quelconque des revendications précédentes, **caractérisé en ce qu'**une température supérieure à celle de l'étape de procédé destinée au moulage par injection et/ou au surmoulage par injection est prévue lors de l'étape de procédé destinée au moulage par compression.

6. Procédé selon l'une quelconque des revendications précédentes, **caractérisé en ce qu'**un refroidissement à impulsion de la première matrice (9) et/ou du vérin de compression (3) s'effectue après ou pendant l'étape de procédé destinée au moulage par compression.

7. Procédé selon l'une quelconque des revendications précédentes, **caractérisé en ce que** les étapes de procédé destinées au moulage par compression et au surmoulage par injection s'effectuent pendant un laps de temps T1 et l'étape de procédé destinée au moulage par injection s'effectue pendant un laps de temps T2, le laps de temps T1 étant plus long que le laps de temps T2.

8. Procédé selon l'une quelconque des revendications précédentes, **caractérisé en ce que** la pièce (101, 102) est séchée pendant l'étape de procédé destinée au moulage par compression.

9. Procédé selon l'une quelconque des revendications précédentes, **caractérisé en ce que** la pièce (101, 102) est colorée, décolorée ou traitée pour être protégée de la lumière avant l'étape de procédé destinée au moulage par compression.

10. Dispositif (1) de fabrication de pièces décoratives moulées à partir d'une pièce de décor (15), laquelle comprend un vérin de compression (3) et une première matrice (9) et un vérin d'injection (5) et une seconde matrice (11), les matrices (9, 11) étant mobiles par rapport aux vérins (3, 5), de telle sorte que le dispositif (1) est mobile dans une position d'ouverture et dans une position de fermeture,
et en ce que le dispositif (1) est par ailleurs mobile dans une position de compression, dans laquelle la première matrice (9) est associée au vérin de compression (3) et la seconde matrice (11) est associée au vérin d'injection (5), et dans une position de coulée, dans laquelle la première matrice (9) est associée au vérin d'injection (5),
les matrices (9, 11) et les vérins (3, 5) étant disposés de telle sorte qu'en présence d'une position de compression et d'une position d'ouverture, une pièce décorative (15) peut être introduite entre le vérin de compression (3) et la première matrice (9),
le vérin de compression (3) et la première matrice (9) étant conçus de telle sorte qu'en présence d'une position de compression et d'une position de fermeture, un moule de compression (31) est fourni de telle sorte qu'une pièce décorative (15) peut être moulée par compression et peut être mise en forme dans la première matrice (9),
la première matrice (9) et le vérin d'injection (5) étant par ailleurs conçus de telle sorte qu'en présence d'une position de coulée et d'une position de fermeture, un moule de moulage par injection (34) destiné au moulage par injection de la pièce décorative (15) est formé au moyen d'un support,
et la seconde matrice (11) et le vérin d'injection (5) étant conçus de telle sorte qu'en présence d'une position de compression et d'une position de fermeture, un moule de surmoulage par injection (36) destiné au surmoulage par injection de la pièce décorative (15) est formé au moyen d'un inhibiteur.

11. Dispositif (1) selon la revendication 10, **caractérisé en ce que** le vérin de compression (3) et la première matrice (9) sont conçus de telle sorte que dans la position de compression, à partir de la position d'ouverture, lors du déplacement dans la position de fermeture, des sections d'une pièce décorative (15) introduite, faisant saillie du moule de compression (31), sont écrasées.

12. Dispositif (1) selon la revendication 10 ou 11, **caractérisé en ce que** le vérin de compression (3) est adapté à la première matrice (9), de telle sorte que dans la position de compression et dans la position de fermeture, une pièce décorative (15) introduite est pressée en appui contre la première matrice (9), et le vérin d'injection (5) est conçu de telle sorte que dans la position de coulée et de fermeture, une cavité de moule (33), laquelle fournit le moule de moulage par injection (34), est formée entre la première matrice (9)et le vérin d'injection (5).

13. Dispositif (1) selon l'une quelconque des revendications 10-12, **caractérisé en ce que** le vérin d'injection (5) comprend un premier canal d'injection (17) destiné à l'injection du support et la seconde matrice (11) comprend un second canal d'injection (19) destiné à l'injection de l'inhibiteur.

14. Dispositif (1) selon l'une quelconque des revendications 10 à 13, **caractérisé en ce que** la première matrice (9) présente une arête d'écrasement arrondie (25) et le vérin de compression (3) présente une arête homologue (27), l'arête homologue (27), en présence de la position de compression et de la position de fermeture, étant espacée, d'une distance définie comme grandeur d'écrasement, de l'arête d'écrasement (25).

15. Dispositif (1) selon l'une quelconque des revendications 10-14, **caractérisé en ce qu'**un dispositif de chauffage (21) est prévu pour le vérin de compression (3).

16. Dispositif (1) selon l'une quelconque des revendications 10-15, **caractérisé en ce qu'**un dispositif de refroidissement à impulsion (23) est prévu pour la première matrice (9) et/ou le vérin de compression (3) et/ou le vérin d'injection (5).

17. Dispositif (1) selon l'une quelconque des revendications 10-16, **caractérisé en ce que** le vérin de compression (3) et le vérin d'injection (5) sont disposés contre un cadre commun (7), et **en ce que** la première matrice (9) et la seconde matrice (11) sont disposées sur un support commun (13), le support (13) étant mobile par rapport au cadre (7), de telle sorte que le dispositif (1) est mobile entre la position d'ouverture et la position de fermeture et/ou la position de compression et la position de coulée.
